# EUROPEAN PATENT APPLICATION

(11) **EP 0 957 389 A1**
(43) Date of publication of application: **17.11.1999**
(21) Application number: 99201378.9
(22) Date of filing: 03.05.1999
(51) Int. Cl.: G02B 27/62, G12B 5/00, G02B 7/02

(54) **Precision assembly technique**

(30) Priority: 13.05.1998 US 78333
(71) Applicant: EASTMAN KODAK COMPANY, Rochester, New York 14650 (US)
(72) Inventor: Blanding, Douglass L., Eastman Kodak Company, Rochester, New York 14650-2201 (US)
(74) Representative: Lewandowsky, Klaus, Dipl.-Ing.

(57) **Abstract**

A method of precision assembly includes the steps of: precisely locating a first component relative to a second component in an alignment fixture: mechanically attaching flexures between the first and second components such that the components are constrained from moving relative to each other; and removing the assembled components from the alignment fixture.

## Description

### CROSS REFERENCE TO RELATED APPLICATIONS

Reference is made to U. S. Serial No.09/078,119, filed concurrently, entitled "Mount For Beam Shaping Optics In A Laser Scanner" by Douglass L. Blanding. and to U. S. Serial No. 09/078,296, filed concurrently, entitled "Precision Assembly Technique Using Alignment Fixture and the Resulting Assembly" by Mark Bedzyk and Douglass L. Blanding.

### FIELD OF THE INVENTION

The invention relates to assembly techniques, and particularly to such assembly techniques requiring precision alignment of the components in the assembly.

### BACKGROUND OF THE INVENTION

The manufacture of assemblies having components, such as mechanical or optical components, which need to be rigidly mounted in a precise location is well known. Often it is critical that the components in the assembly be positioned with respect to each other with a high degree of precision. For example. in a laser scan printing apparatus, it is very important that the laser be in just the right location in relation to the rest of the optical components. If the laser is not precisely and rigidly held in its correct position, the performance of the printing apparatus will most certainly be compromised. Even a positional error of a few microns can cause a noticeable degradation of the printer's performance. For this reason, it is of the greatest importance in the manufacture of such precision apparatus that great care be taken in assuring that critical components be very accurately and precisely mounted in place.

There are different approaches that have been taken in the factory to achieve this result. One approach is to specify very tight dimensional tolerances on all parts having dimensions which contribute to the determination of the final location of components required to be precisely and accurately mounted. Unfortunately, this approach can be expensive. Parts with very tight dimensional tolerances can cost a lot more than parts with ordinary commercially typical tolerances.

Another approach is to design position adjustment mechanisms into the apparatus which have knobs that can be used to "dial in" the exact position of the critical components. For example. a knob might be provided on the apparatus which, when turned, would cause the laser to move along the optical axis (the Z axis), allowing its precise focal position to be set. Other knobs might be provided to make adjustment in other critical directions. such as X and Y. Also, knobs might be provided to make rotational adjustment of critical components. It is easy to imagine that if a component were to be mounted so that its precise position could be set with knobs, those knobs with their associated hardware and brackets could get to be fairly bulky and complicated. Also. all this additional hardware would add considerable additional expense to the apparatus.

Another approach is to design the positioning hardware and knobs to be part of a factory fixture, then fixing the precision components in place on the apparatus after the components have been precisely aligned, for example by using an adhesive such as potting compound or epoxy. In this way, the apparatus is kept inexpensive by using parts with ordinary, commercially typical tolerances while still achieving very accurate and precise positional location of the critical components. The factory fixture would, however, be fairly elaborate and expensive. since it would contain the position adjusting hardware and knobs. However, this fixture would be used over and over again to align many, many products. So its expense, when divided among the many products aligned on it. would be insignificant.

There are, however, drawbacks of using adhesive to fix the parts in position. One of them is that one must wait for the adhesive to cure before removing the hardware apparatus from the fixture. This requires that the apparatus must reside on the fixture for some additional time while curing takes place. This, of course, reduces the number of hardware units which can be manufactured by this fixture in a given span of time. To improve this situation, quick curing adhesive may be specified, such types as "5 minute curing" epoxy or "instant UV curing" adhesive. The idea with using the UV curing adhesive is to get instant curing (but weak strength) while the apparatus is on the fixture, then carefully remove it from the fixture and apply some additional adhesive which is more durable and allow overnight curing off line. For many purposes, the 5 minute curing epoxy is durable enough to provide a lasting bond. Fixing with adhesive also has some other drawbacks. One drawback is that as the adhesive cures, it shrinks somewhat. This may produce some unwanted residual stress or positional error in the location of the component(s) being assembled. Some other drawbacks of adhesive are that it must be carefully stored and used so as not to have it "go bad" on the shelf or in the pot. Adhesives have limited shelf life and for reasons just previously discussed, a very short pot life. Still another disadvantage of adhesive assembly is that after an apparatus is assembled, if any component fails. then rework is difficult if not impossible. Once the adhesive is cured, the parts cannot be disassembled and reassembled. The adhesive forms a permanent bond.

There is a need therefor for an improved method of precision assembling components.

### SUMMARY OF THE INVENTION

The present invention is directed to overcoming one or more of the problems set forth above. Briefly summarized, according to one aspect of the present invention a method of precision assembly includes the steps of: precisely locating a first component relative to a second component in an alignment fixture; mechanically attaching flexures between the first and second components such that the components are constrained from moving relative to each other: and removing the assembled components from the alignment fixture.

### ADVANTAGES OVER THE PRIOR ART

The present invention has the following advantages over the prior art use of adhesive in precision assembly:
infinite shelf life
infinite work time (pot life)
instant curing
no shrinkage
can be reused

### BRIEF DESCRIPTION OF THE DRAWINGS

Fig. 1 is a perspective view showing a laser and a lens housing held in a precision fixture for assembly;
Fig. 2 is a perspective view showing a preferred technique of assembly according to the present invention;
Fig. 3 is a perspective view showing an alternative embodiment of the assembly technique of the present invention.

### DETAILED DESCRIPTION OF THE INVENTION

This invention uses flexures to achieve a rigid mechanical connection between two component parts or assemblies. The flexures are clamped in place for example by screws or bolts after the parts have been precisely aligned in a fixture. Before the flexures are fixed by the screws, there is no connection. The parts can be easily moved relative to each other in all degrees of freedom. Once the position of the parts has been adjusted to the desired position, the screws are tightened. This clamps the flexures in place. The flexure configuration then provides a three dimensionally rigid connection between the parts.

The usefulness of this configuration of flexures is not limited to connections between precision optical components. It can be used anywhere that a three dimensionally rigid connection is needed, whether or not the parts need to be precisely aligned.

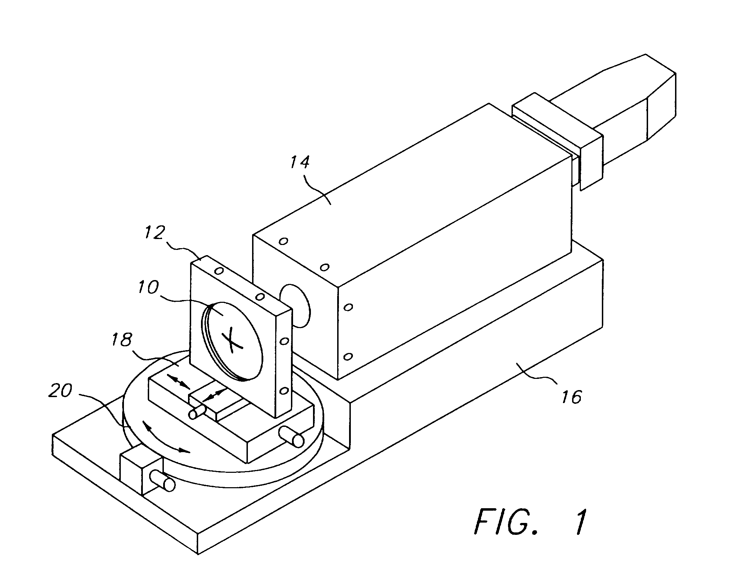

Turning now to Fig. 1, a lens 10. mounted in a lens housing 12 is held in a precise position relative to a laser 14 by an alignment fixture 16. In the final assembly, the lens housing 12 must be rigidly mounted in relation to the laser 14 so that it is in very precise, accurate alignment therewith. For this purpose, the alignment fixture 16 is equipped with an X-Y translation stage 18 and a rotation stage 20, that are used to move the lens housing 12 by small precise increments to align the lens housing with the laser. This alignment fixture 16 is shown by way of example. For complete freedom of adjustment in any direction, a Z translation stage and two more orthogonal rotation stages may be added. Some means, such as a target, (not shown) is also provided on the alignment fixture 16 capable of indicating when the lens housing 12 is precisely aligned with respect to the laser 14.

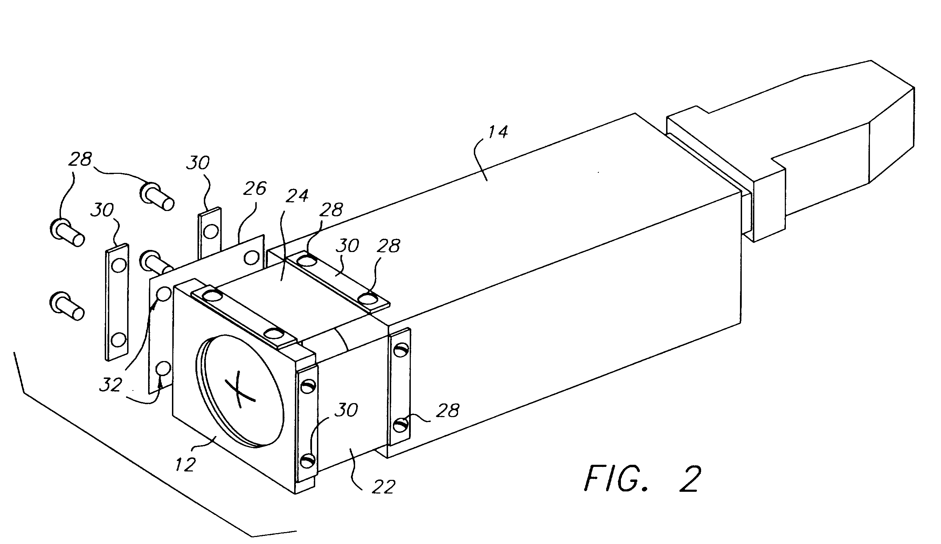

Referring to Fig. 2, when the precise alignment has been achieved. according to the present invention, and while the parts are still held in the alignment fixture 16 (not shown in Fig. 2), three sheet metal flexures 22, 24 and 26 are installed between the lens housing 12 and laser 14. The sheet metal flexures are quite thin and can be bent elastically quite easily. The flexures 22. 24 and 26 are secured in place by screws 28 and clamp plates 30. The holes 32 in the flexures are considerably larger in diameter than the screws 28, to allow for alignment of the components in the fixture.

The procedure for aligning and fixing the components relative to each other is as follows: 1) with the clamping screws 28 loose (not tight), the fixture 16 is used to move the lens housing 12 into its nominally correct position in relation to the laser 14. The flexibility of the sheet metal flexures 22, 24, 26 and the oversize holes 32 permit a moderate amount of motion for the lens housing 12 in every degree of freedom. Once the lens housing 12 and laser 14 are in alignment. the clamping screws 28 are tightened. The flexures 22. 24, 26 now provide a three dimensionally rigid connection between the lens and laser. The apparatus is removed from the fixture 16 and the precise alignment between the laser 14 and lens housing 12 is maintained by the flexures.

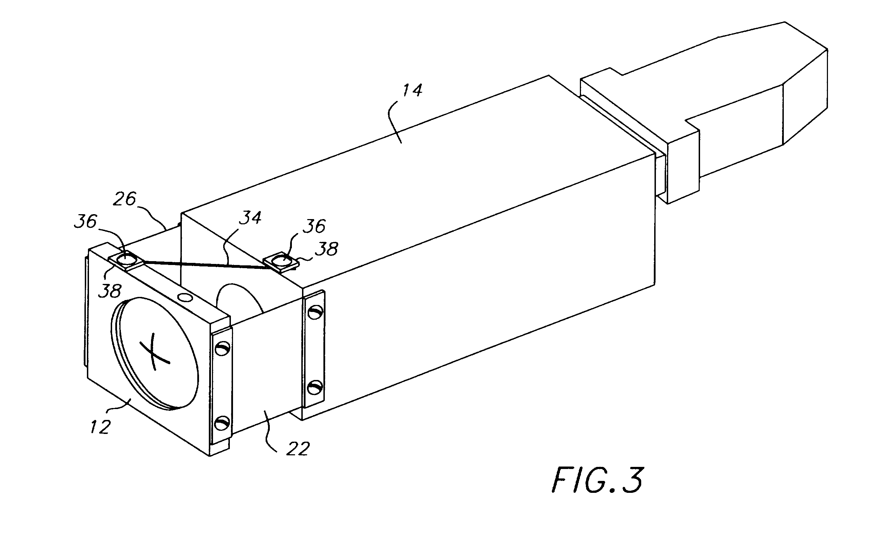

The minimum requirement for achieving a three dimensionally rigid connection using just three sheet flexures is that no two be coplanar. More than three sheet flexures could also be used. Alternatively, as shown in Fig. 3. two non coplanar sheet flexures 22 and 26 can be used in addition to a single wire flexure 34 whose axis does not intersect (nor is it parallel to) a line defined by the intersection of the two sheet flexures. The wire 34 is secured by clamp screws 36 and plates 38. In the case shown in Fig. 3, since the sheet flexures are parallel, such a line would be at infinity and parallel to the planes of the flexures. Before the clamping screws 36 are tightened, the wire 34 is free to slide a small amount under the loose clamps. Also, because of the slenderness of the wire flexure 34, it can undergo a small amount of elastic bending while the lens housing 12 is being positioned by the fixture. But when the clamp screws 36 are tightened, the wire flexure 34 and sheet flexures combine to provide a very high stiffness, three dimensionally rigid connection between the lens housing 12 and laser 14.

Thus far, the invention has been described with respect to assembling individual components. The invention is equally suited for mounting subassemblies of components. For example, the laser 14 and/or the lens housing 12 may each comprise a plurality of components that are individually assembled using the technique of the present invention, then the resulting subassemblies are assembled using the technique of the present invention.

The invention has been described in detail with particular reference to certain preferred embodiments thereof, but it will be understood that variations and modifications can be effected within the spirit and scope of the invention.

### PARTS LIST

- 10: lens
- 12: lens housing
- 14: laser
- 16: alignment fixture
- 18: translation stage
- 20: rotation stage
- 22: sheet flexure
- 24: sheet flexure
- 26: sheet flexure
- 28: screw
- 30: clamp plate
- 32: hole
- 34: wire flexure
- 36: screw
- 38: clamp plate

## Claims

1. A method of precision assembly comprising the steps of:
a) precisely locating a first component relative to a second component in an alignment fixture:
b) mechanically attaching flexures between the first and second components such that the components are constrained from moving relative to each other; and
c) removing the assembled components from the alignment fixture.

2. The method claimed in claim 1. wherein the flexures comprise three non coplanar sheets.

3. The method claimed in claim 2, wherein the sheet flexures are secured to the components with screws and are provided with oversize holes to provide relative movement between the screws and the sheets prior to tightening the screws.

4. The method claimed in claim 1, wherein the flexures comprise two non coplanar sheet flexures and a wire flexure whose axis does not intersect and is not parallel to a line defined by the intersection of the plane of the two sheet flexures.

5. The method claimed in claim 4, wherein the sheet flexures are secured to the components with screws and are provided with oversize holes to provide relative movement between the screws and the sheets prior to tightening the screws and the wire flexure is secured to the components by set screws that hold the wire in holes in the components, the wires being free to slide in the holes prior to tightening of the set screws.

6. The method claimed in claim 1, wherein the first and/or second component is a subassembly of components that is assembled according to the method of claim 1.

7. A precision assembly made by the method of claim 1.

8. A precision assembly made by the method of claim 2.

9. A precision assembly made by the method of claim 3.

10. A precision assembly made by the method of claim 4.

11. A precision assembly made by the method of claim 5.

12. A precision assembly made by the method of claim 6.
